# EUROPEAN PATENT APPLICATION

(11) **EP 4 715 712 A1**
(43) Date of publication of application: **25.03.2026**
(21) Application number: 25201772.8
(22) Date of filing: 12.09.2025
(51) Int. Cl.: G06Q 20/18, G06Q 20/20, G06Q 20/40, G07G 1/00, G07G 3/00

(54) **COMPUTER PROGRAM, FRAUD DETECTION APPARATUS, AND FRAUD DETECTION SYSTEM**

(30) Priority: 18.09.2024 JP 2024161474
(71) Applicant: Fujitsu Limited, Kawasaki-shi, Kanagawa 211-8588 (JP)
(72) Inventor: TAKAHASHI, Jun, Kawasaki-shi, Kanagawa, 211-8588 (JP); YOKOO, Kaoru, Kawasaki-shi, Kanagawa, 211-8588 (JP)
(74) Representative: Hoffmann Eitle

(57) **Abstract**

A storing unit stores area information indicating positions of a plurality of image areas set in a captured image of a front region of a self-checkout terminal including a scanner. A processing unit recognizes a product from the captured image. The processing unit detects a fraudulent action related to a scanning operation for causing the scanner to scan product information attached to the product, based on a movement path of the recognized product in the plurality of image areas, and a residence time of the product in a first image area that is closest to the scanner among the plurality of image areas.

## Description

### FIELD

The embodiments discussed herein relate to a computer program, a fraud detection apparatus, and a fraud detection system.

### BACKGROUND

In retail stores, self-checkout terminals that allow users to scan product barcodes and perform checkout operations by themselves have become increasingly widespread. When using a self-checkout terminal, the user scans the barcode affixed to the product using a barcode scanner provided in the self-checkout terminal.

As a method for determining whether a barcode scanning operation has been properly performed, the following technique has been proposed. For example, in a point-of-sale (POS) terminal, when the barcode of a product is scanned by a scanner, an image of the product located at the scanning position at that time is captured and extracted, and the captured image is traced backward to verify that the corresponding product was taken from the pre-scan product placement area. In this way, it is verified that the barcode has been properly scanned.

Another proposed technique is a self-checkout terminal in which a shopping basket and a product taken from the basket are recognized from captured images. The terminal determines whether the product has been scanned, and an error alert is issued if it is determined that the product has not been scanned. See, for example, the following literatures.
Japanese Laid-open Patent Publication No. 2009-289222
Japanese Laid-open Patent Publication No. 2011-54038

There is a problem in that it is difficult to accurately detect fraudulent actions related to scanning operations without cooperation with a self-checkout terminal or a POS system, using only captured images from a camera.

### SUMMARY

One aspect of the present disclosure aims to provide a fraud detection program, a fraud detection apparatus, and a fraud detection system that are capable of accurately detecting fraudulent actions related to scanning operations by using captured images.

In one aspect, there is provided a computer program that causes a computer to execute a process including: recognizing a product from a captured image of a front region of a self-checkout terminal including a scanner; and detecting a fraudulent action related to a scanning operation for causing the scanner to scan product information attached to the product, based on a movement path of the product in a plurality of image areas set in the captured image, and a residence time of the product in a first image area that is closest to the scanner among the plurality of image areas.

### BRIEF DESCRIPTION OF DRAWINGS

FIG. 1 illustrates a configuration example and a processing example of a fraud detection system according to a first embodiment;
FIG. 2 illustrates a configuration example of a self-checkout monitoring system according to a second embodiment;
FIG. 3 illustrates a hardware configuration example of a fraud detection device;
FIGS. 4A and 4B illustrate an overview of a method for detecting scan skipping;
FIG. 5 illustrates a configuration example of processing functions provided in the fraud detection device;
FIG. 6 illustrates an example of area setting for determination;
FIG. 7 illustrates a data configuration example of area setting information;
FIG. 8 is a flowchart illustrating a processing example performed by an operation extracting unit;
FIG. 9 illustrates a data configuration example of a product position information database;
FIG. 10 is a flowchart illustrating a processing example performed by an area-passing detecting unit;
FIG. 11 illustrates a data configuration example of an area-passing information database;
FIG. 12 is a flowchart illustrating a processing example performed by a determining unit;
FIGS. 13A to 13C illustrate movement trajectory examples of a product when a normal scanning operation is performed;
FIGS. 14A to 14C illustrate movement trajectory examples of a product when a fraudulent action is performed;
FIGS. 15A and 15B illustrate a detection example of scan skipping based on movement trajectories;
FIG. 16 is a flowchart illustrating a determination process example based on a movement trajectory;
FIG. 17 is a flowchart illustrating a determination process example based on both area-passing information and a movement trajectory;
FIG. 18 is a flowchart illustrating a processing example performed by the determining unit in a second modification;
FIG. 19 illustrates a configuration example of processing functions included in a fraud detection device according to a third embodiment;
FIG. 20 is a flowchart illustrating a processing example performed by a determining unit according to the third embodiment;
FIG. 21 is a flowchart illustrating a modified example of the determination processing depicted in FIG. 20;
FIG. 22 is a flowchart illustrating a processing example performed by a notifying unit according to the third embodiment;
FIG. 23 illustrates a first modification of the process depicted in FIG. 22; and
FIG. 24 illustrates a second modification of the process depicted in FIG. 22.

### DESCRIPTION OF EMBODIMENTS

Hereinafter, embodiments will be described with reference to the drawings.

### (a) First Embodiment

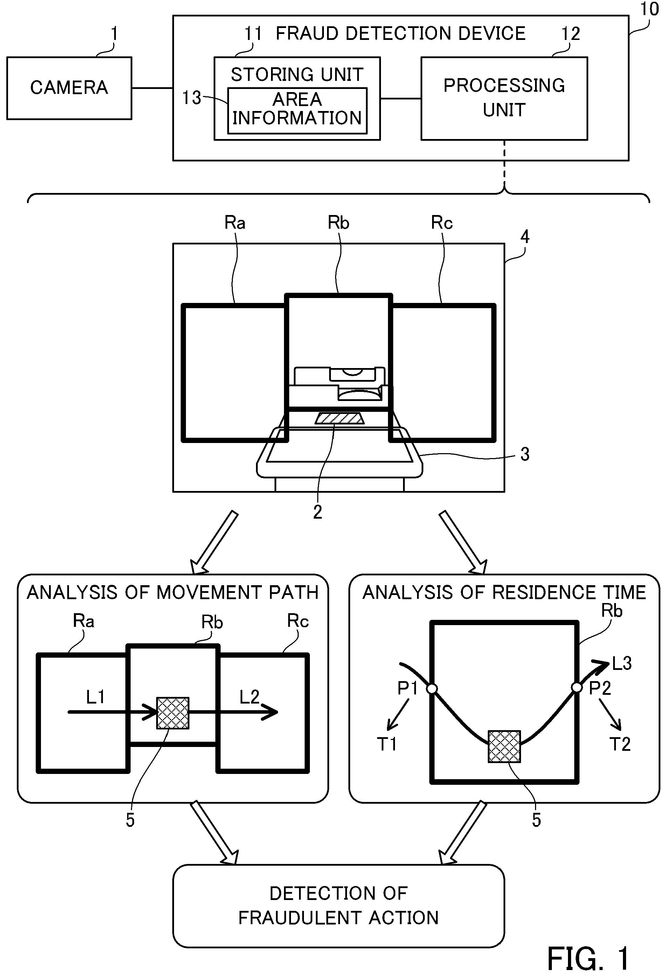

FIG. 1 illustrates a configuration example and a processing example of a fraud detection system according to a first embodiment. The fraud detection system depicted in FIG. 1 includes a fraud detection device 10 and a camera 1 connected to the fraud detection device 10.

The camera 1 captures a front region of a self-checkout terminal 3 equipped with a scanner 2 and transmits data of the captured image to the fraud detection device 10. The scanner 2 is a device that scans a barcode attached to a product to be purchased and is disposed at a position that allows the purchaser to perform a scanning operation by bringing the product close from the front side of the self-checkout terminal 3. For example, the camera 1 captures the front region of the self-checkout terminal 3 from above the self-checkout terminal 3.

The fraud detection device 10 includes a storing unit 11 and a processing unit 12. The storing unit 11 is a storage area secured in a storage device (not illustrated) included in the fraud detection device 10. The processing unit 12 is, for example, a processor. The processing described below is implemented, for example, by the processing unit 12, which is a processor, executing a predetermined program.

The storing unit 11 stores area information 13 indicating the positions of a plurality of image areas set in the captured image. The processing unit 12 recognizes a product from the captured image. The processing unit 12 then detects a fraudulent action related to a scanning operation based on a movement path of the recognized product across the plurality of image areas and a residence time of the product in a first image area, which is located closest to the scanner 2 amongst the plurality of image areas.

In a captured image 4 depicted in FIG. 1, three image areas Ra to Rc are set as an example. The following describes an example of processing using these image areas Ra to Rc.

The processing unit 12 recognizes a product 5 from the captured image 4. The processing unit 12 then analyzes a movement path of the product 5 through the image areas Ra to Rc. In this case, for example, the processing unit 12 analyzes through which image areas and in what order the product 5 has moved.

The image areas Ra to Rc are, for example, arranged in sequence along a path through which the product 5 moves when a purchaser performs a normal scanning operation in the captured image 4. In the example of FIG. 1, when a normal scanning operation is performed, the product 5 moves from left to right in the captured image 4. In this case, when a normal scanning operation is performed, the product 5 moves from the image area Ra to the image area Rb as indicated by an arrow L1, and the scanning operation is performed. After that, the product 5 moves from the image area Rb to the image area Rc as indicated by an arrow L2.

However, even when the product 5 moves through the image areas Ra, Rb, and Rc in this order, as described above, there are cases in which the scanning operation is not performed. This occurs, for example, in a case where the product 5 is moved relatively quickly near the scanner 2 so that the scanner 2 is unable to scan the product 5 or so that it appears as if the purchaser has performed a scanning operation. To detect such fraudulent actions, the processing unit 12 takes into account both the movement path described above and the residence time of the product 5 in the image area Rb, which is located closest to the scanner 2.

For example, suppose the product 5 moves along a path indicated by an arrow L3 in the image area Rb. In this path, the product 5 enters the image area Rb at an entry position P1 and exits the image area Rb at an exit position P2. In this case, the processing unit 12 acquires a time T1 at which the product 5 moves to the entry position P1 and a time T2 at which the product 5 moves to the exit position P2, and calculates the residence time of the product 5 in the image area Rb as (T2 - T1).

The processing unit 12 detects a fraudulent action based on the analysis result of the movement path and the analysis result of the residence time. For example, suppose the processing unit 12 determines that the product 5 has moved through the image areas Ra, Rb, and Rc in this order. In this case, if the residence time of the product 5 in the image area Rb is equal to or greater than a predetermined threshold, the processing unit 12 determines that no fraudulent action has been performed. However, if the residence time is less than the threshold, the processing unit 12 determines that a fraudulent action has been performed.

Through such processing, the fraud detection device 10 is capable of detecting a fraudulent action related to a scanning operation with high accuracy by using the captured image 4 obtained by the camera 1.

### (b) Second Embodiment

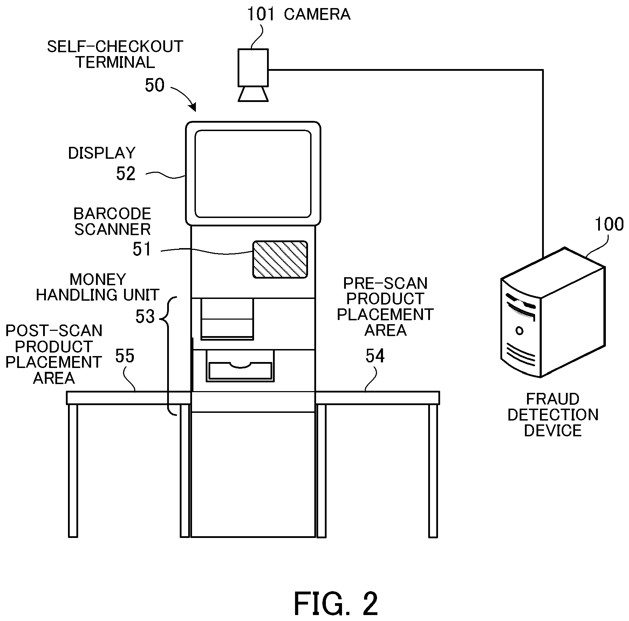

FIG. 2 illustrates a configuration example of a self-checkout monitoring system according to a second embodiment. The self-checkout monitoring system depicted in FIG. 2 is a system for monitoring purchasing actions of a user (customer) in a store where products are sold, and includes a fraud detection device 100 and a camera 101 connected to the fraud detection device 100. The fraud detection device 100 is an example of the fraud detection device 10 illustrated in FIG. 1.

The fraud detection device 100 is a computer device such as a personal computer. The camera 101 is installed in the store where a self-checkout terminal 50 is installed. The self-checkout terminal 50 is a terminal device included in a POS system and is a self-service cash register device with which a user performs a checkout operation. The self-checkout terminal 50 is also referred to as a self-checkout unit.

The self-checkout terminal 50 includes a barcode scanner 51, a display 52, and a money handling unit 53. The barcode scanner 51 reads a barcode indicating a product code that is attached to a product. The display 52 displays the price of the product whose barcode has been read, the total price of the products to be purchased, the amount of change, and so forth. The money handling unit 53 receives a payment from the user and dispenses change.

In the present embodiment, a pre-scan product placement area 54, in which products before scanning are placed, and a post-scan product placement area 55, in which products after scanning are placed, are disposed at positions facing each other across the self-checkout terminal 50. For example, the user temporarily places the products to be purchased in the pre-scan product placement area 54. In some cases, the products to be purchased are placed in an in-store shopping basket, and the shopping basket itself is placed in the pre-scan product placement area 54. The user picks up each product placed in the pre-scan product placement area 54 (or placed in the basket) one by one and brings the product close to the barcode scanner 51 to perform a "scanning operation" in which the barcode is read.

When the user finishes the scanning operations for all the products, the user performs a "checkout operation" to request payment. For example, when the display 52 is a touch panel, the user performs the checkout operation by pressing a checkout button on the touch panel. The user who has performed the checkout operation deposits the purchase amount into the money handling unit 53 according to the display information on the display 52 and receives the change from the money handling unit 53, if change is due.

The camera 101 captures a front region of the self-checkout terminal 50, particularly around the barcode scanner 51, so that the purchasing actions of the user using the self-checkout terminal 50 are included in the captured image. In the present embodiment, the camera 101 is disposed above the self-checkout terminal 50, and a region near the front surface of the self-checkout terminal 50 is captured by the camera 101 from above the self-checkout terminal 50. The fraud detection device 100 determines, based on the captured image taken by the camera 101, whether the user has performed proper purchasing actions, and issues a warning if it is determined that the user has performed abnormal purchasing actions.

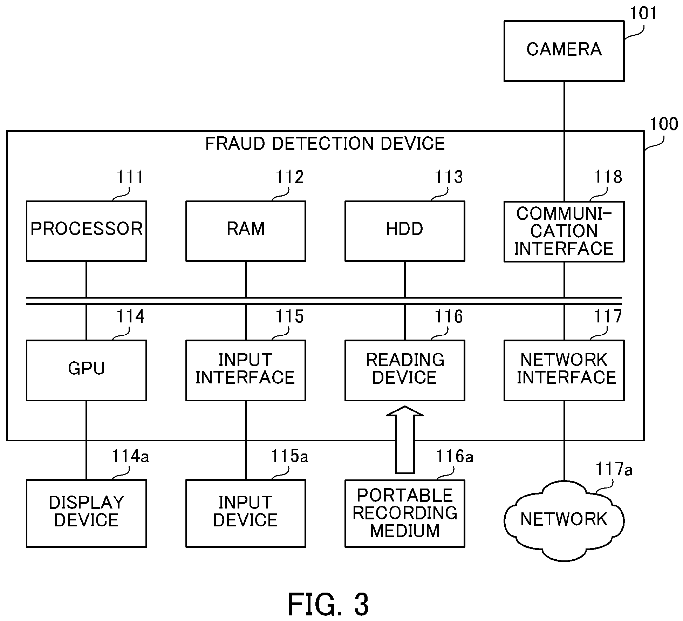

FIG. 3 illustrates a hardware configuration example of a fraud detection device. The fraud detection device 100 is implemented, for example, as a computer configured as illustrated in FIG. 3. The fraud detection device 100 illustrated in FIG. 3 includes a processor 111, a random access memory (RAM) 112, a hard disk drive (HDD) 113, a graphics processing unit (GPU) 114, an input interface 115, a reading device 116, a network interface 117, and a communication interface 118.

The processor 111 comprehensively controls the overall operation of the fraud detection device 100. The processor 111 may be, for example, a central processing unit (CPU), a micro processing unit (MPU), a digital signal processor (DSP), an application specific integrated circuit (ASIC), or a programmable logic device (PLD). The processor 111 may also be a combination of two or more of a CPU, MPU, DSP, ASIC, and PLD. The fraud detection device 100 may include a plurality of processors. Among multiple processes executed by the fraud detection device 100, one processor may execute one process, while a different processor may execute another process. The processor may also be referred to as processor circuitry.

The RAM 112 is used as a main storage device of the fraud detection device 100. At least a portion of an operating system (OS) program or an application program to be executed by the processor 111 is temporarily stored in the RAM 112. The RAM 112 also stores various data used in processing by the processor 111.

The HDD 113 is used as an auxiliary storage device of the fraud detection device 100. The HDD 113 stores OS programs, application programs, and various types of data. Note that other types of non-volatile storage devices, such as a solid state drive (SSD), may be used as the auxiliary storage device.

A display device 114a is connected to the GPU 114. The GPU 114 causes an image to be displayed on the display device 114a in accordance with instructions from the processor 111. The display device 114a may be, for example, a liquid crystal display or an organic electroluminescence (EL) display.

An input device 115a is connected to the input interface 115. The input interface 115 transmits signals output from the input device 115a to the processor 111. The input device 115a may be, for example, a keyboard or a pointing device. Examples of pointing devices include a mouse, a touch panel, a tablet, a touch pad, and a trackball.

A portable recording medium 116a is attachable to and detachable from the reading device 116. The reading device 116 reads data recorded on the portable recording medium 116a and transmits the data to the processor 111. Examples of the portable recording medium 116a include optical discs and semiconductor memories.

The network interface 117 transmits and receives data to and from other devices via a network 117a.

The communication interface 118 transmits and receives data to and from the camera 101.

With the above-described hardware configuration, the fraud detection device 100 realizes its processing functions. The processor 111 is an example of the processing unit 12 illustrated in FIG. 1, and a storage area secured in the RAM 112 or the HDD 113 corresponds to an example of the storing unit 11 illustrated in FIG. 1.

In recent years, self-checkout terminals operated by users themselves have rapidly become widespread, for example, to address labor shortages caused by population decline. However, at self-checkout terminals, there are cases in which users deliberately commit fraudulent actions, such as intentionally not scanning the barcode of a product. Therefore, technologies capable of detecting such fraudulent actions are needed.

In the present embodiment, among the above-mentioned types of fraudulent actions, the fraud detection device 100 detects a specific type of fraudulent action referred to as "scan skipping," in which a user pretends to scan a product's barcode using the barcode scanner 51 but does not actually perform the scanning. As one possible method for detecting scan skipping, the fraud detection device 100 may operate in cooperation with the self-checkout terminal 50 or a POS system to perform the detection. For example, the fraud detection device 100 may detect scan skipping by using, in addition to an image captured by the camera 101, detection information related to the scanning operation and information about scanned products, which are obtained from the self-checkout terminal 50 or the POS system.

On the other hand, it is difficult to accurately detect scan skipping using only an image captured by the camera 101. If the fraud detection device 100 is able to detect scan skipping solely from an image captured by the camera 101, then cooperation with the self-checkout terminal 50 or the POS system becomes unnecessary. This makes it possible to develop and install the fraud detection device 100 independently of the specifications of the self-checkout terminal 50 or the POS system. As a result, the versatility of the fraud detection device 100 is improved, and installation becomes easier.

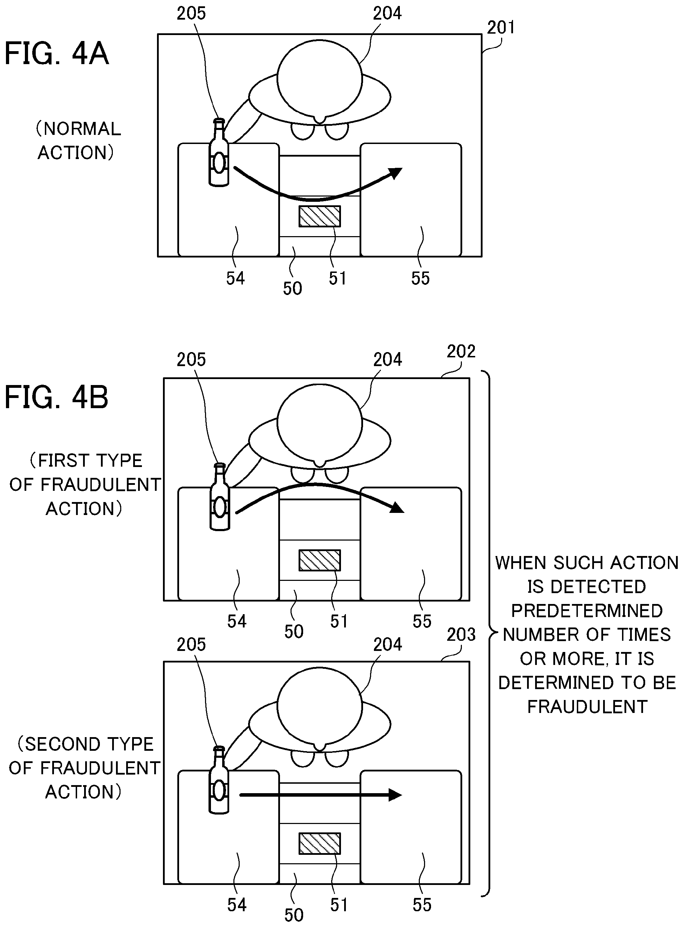

In the present embodiment, the fraud detection device 100 accurately detects scan skipping by using only an image captured by the camera 101, based on the method illustrated in FIGS. 4A and 4B.

FIGS. 4A and 4B illustrate an overview of a method for detecting scan skipping. Images 201 to 203 illustrated in FIGS. 4A and 4B are images taken from above by the camera 101, depicting an area near the front surface of the self-checkout terminal 50, specifically an area in the vicinity of the front side of the barcode scanner 51. The images 201 to 203 also depict a user 204 holding a product 205 to be purchased.

In the present embodiment, as illustrated in FIGS. 4A and 4B, the pre-scan product placement area 54 is disposed to the left of the self-checkout terminal 50, and the post-scan product placement area 55 is disposed to the right of the self-checkout terminal 50, when viewed from above. In this case, the product 205 held by the user 204 moves from left to right in the captured image when a scanning operation is performed. However, the pre-scan product placement area 54 and the post-scan product placement area 55 may be arranged in reverse positions across the self-checkout terminal 50. In that case, the movement direction of the product 205 would also be reversed.

The image 201 is an example of a captured image depicting a normal action performed by the user 204. In the image 201, the product 205 held by the user 204 is brought close to the barcode scanner 51 from the pre-scan product placement area 54, and then moved to the post-scan product placement area 55.

The images 202 and 203 are examples of captured images in which scan skipping takes place. As patterns of actions observed in cases where scan skipping occurs, for example, a first type of fraudulent action as depicted in the image 202 and a second type of fraudulent action as illustrated in the image 203 are conceivable.

In the image 202, the product 205 held by the user 204 is taken from the pre-scan product placement area 54 and moves to the right while distancing itself from the barcode scanner 51, and is then placed in the post-scan product placement area 55. In the image 202, the product 205 starts from the pre-scan product placement area 54 and first moves diagonally upward to the right, passes in front of the barcode scanner 51, then changes direction diagonally downward to the right, and is moved to the post-scan product placement area 55.

In this first fraudulent action, the product 205 is clearly moved away from the barcode scanner 51 so that the barcode of the product 205 is not scanned. Therefore, compared to the normal action depicted in the image 201, there is a clear difference in the movement path of the product 205. Accordingly, the fraud detection device 100 is capable of detecting the first fraudulent action based on the movement path of the product 205 in the captured image.

On the other hand, in the second type of fraudulent action, the user 204 moves the product 205 at high speed in the vicinity of the barcode scanner 51. This allows the user 204 to make the movement path of the product 205 resemble that of a normal action, so as not to be noticed for committing scan skipping, while still preventing the barcode of the product 205 from being scanned. For example, as illustrated in the image 203, the product 205 held by the user 204 is taken from the pre-scan product placement area 54 and is moved almost in a straight line to the post-scan product placement area 55 without being brought close to the barcode scanner 51. In some cases, as in the image 201, the product 205 may be briefly brought near the barcode scanner 51 before being moved to the post-scan product placement area 55.

In this second fraudulent action, because the movement path of the product 205 is similar to that in a normal action, the fraud detection device 100 is not able to detect that the second fraudulent action occurred based solely on the movement path of the product 205 in the captured image. However, the fraud detection device 100 is capable of detecting the second fraudulent action based on the movement speed of the product 205 in the vicinity of the barcode scanner 51.

In view of the above, the fraud detection device 100 detects scan skipping based on both the movement path and the movement speed of the product 205. This allows scan skipping to be accurately detected using only the image captured by the camera 101.

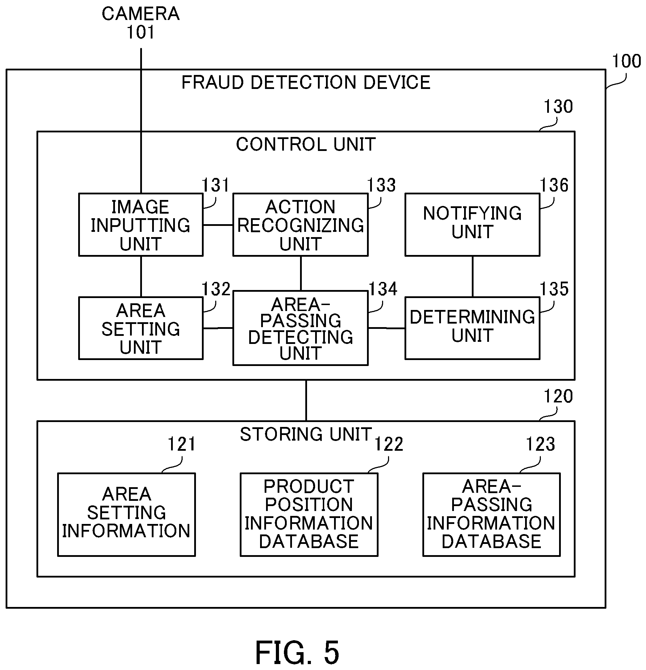

FIG. 5 illustrates a configuration example of processing functions provided in the fraud detection device. The fraud detection device 100 includes a storing unit 120 and a control unit 130.

The storing unit 120 is a storage area secured in a storage device included in the fraud detection device 100, such as the RAM 112 or the HDD 113. The storing unit 120 stores area setting information 121, a product position information database 122, and an area-passing information database 123.

The area setting information 121 stores position information of a plurality of determination areas set on a captured image obtained by the camera 101. The product position information database 122 stores, for each image frame, the position of a product held by the user in the captured image. The area-passing information database 123 stores information indicating the passing status of the product in each of the set determination areas.

The processes of the control unit 130 are realized, for example, by the processor 111 executing a predetermined application program. The control unit 130 includes an image inputting unit 131, an area setting unit 132, an action recognizing unit 133, an area-passing detecting unit 134, a determining unit 135, and a notifying unit 136.

The image inputting unit 131 receives data of a captured image taken by the camera 101.

The area setting unit 132 sets a plurality of determination areas on the captured image and registers position information of the set determination areas in the area setting information 121.

The action recognizing unit 133 performs image recognition processing on the captured image to recognize a product held by a person (user) from the captured image and tracks the position of the product in the captured image. The action recognizing unit 133 then registers position information representing the movement path of the product in the product position information database 122.

The area-passing detecting unit 134 detects the passing status of the product in each of the set determination areas based on the position information of the product registered in the product position information database 122, and registers information indicating the passing status in the area-passing information database 123. At this time, the area-passing information database 123 also stores the entry time and exit time of the product with respect to a specific determination area.

The determining unit 135 detects the occurrence of scan skipping based on the information registered in the product position information database 122 and the area-passing information database 123.

When scan skipping is detected, the notifying unit 136 notifies the administrator of the self-checkout terminal 50, for example via the display device 114a, that scan skipping has been detected.

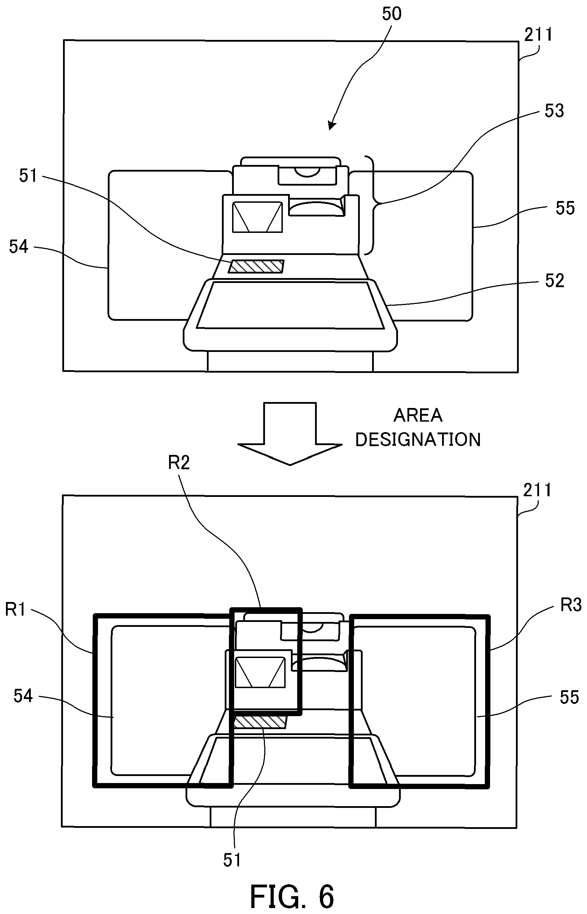

FIG. 6 illustrates an example of area setting for determination. The area setting unit 132 sets a plurality of determination areas in a captured image taken by the camera 101, in accordance with an input operation performed by the administrator when the camera 101 is installed. These areas are used for determining whether scan skipping is committed.

A captured image 211 illustrated in FIG. 6 is an example of an image captured by the camera 101. The camera 101 is installed above the self-checkout terminal 50 so as to capture a region near the front surface of the self-checkout terminal 50 from above the self-checkout terminal 50. More specifically, the camera 101 is set such that at least the region in front of the barcode scanner 51, the upper surface of the pre-scan product placement area 54, and the upper surface of the post-scan product placement area 55 are included in its capture range.

As illustrated in FIG. 2, in the self-checkout terminal 50, the display 52 is provided above the barcode scanner 51, and the money handling unit 53 is provided below the barcode scanner 51. Therefore, in the captured image 211 illustrated in FIG. 6, the display 52 appears in the region below the barcode scanner 51, and the money handling unit 53 appears in the region above the barcode scanner 51.

In the captured image 211, as illustrated in the lower part of FIG. 6, the following determination areas are set: a product pickup area R1, a scanning area R2, and a product removal area R3. The product pickup area R1 is set so as to include the upper surface region of the pre-scan product placement area 54. The scanning area R2 is set in the frontside region of the barcode scanner 51 such that a product being scanned appears in the image. The product removal area R3 is set so as to include the upper surface region of the post-scan product placement area 55.

By setting such determination areas as described above, when a proper scanning operation is performed, the product sequentially moves through the product pickup area R1, the scanning area R2, and the product removal area R3. That is, the plurality of determination areas is preferably arranged along the movement path of the product when a proper scanning operation is performed.

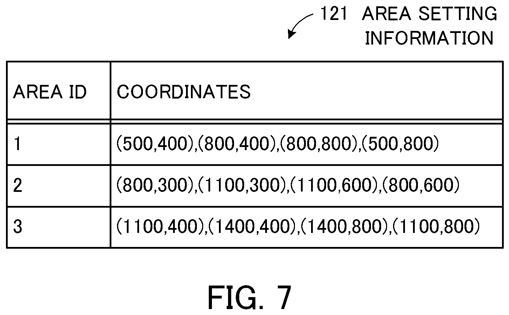

FIG. 7 illustrates a data configuration example of area setting information. In the area setting information 121, for each of the product pickup area R1, the scanning area R2, and the product removal area R3, an area ID and coordinates are registered.

The area ID indicates an identification number assigned to each determination area. In the example of FIG. 7, area IDs "1", "2", and "3" respectively indicate the product pickup area R1, the scanning area R2, and the product removal area R3.

The coordinates are coordinate information that defines the spatial position of each determination area within a captured image. In the present embodiment, as illustrated in FIG. 6, each determination area is defined as a rectangular shape. In this case, four vertex coordinates of each determination area are registered in the coordinate field in a predetermined order. Note that, in such a case where the determination area is rectangular, it is also acceptable to register, for example, the coordinates of one vertex and the coordinates of the opposite vertex (e.g., the top-left and bottom-right corners in the captured image) in the coordinate field. Furthermore, the shape of each determination area is not limited to a rectangle.

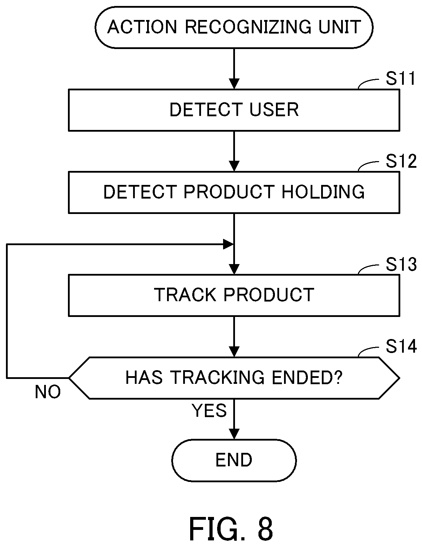

FIG. 8 is a flowchart illustrating a processing example performed by an action recognizing unit.

[Step S11] The action recognizing unit 133 detects a user from a captured image by performing a human recognition process.

[Step S12] The action recognizing unit 133 detects, from the captured image, the holding of a product by the detected user by performing an object recognition process.

In steps S11 and S12, for example, object or human recognition technologies such as you only look once (YOLO) may be used to detect a user and a product. Alternatively, both the user detection in step S11 and the product detection in step S12 may be executed simultaneously by using human-object interaction detection (HOID) technology. In this case, the captured image is input to a trained model of HOID (a neural network), and HOID information representing interactions between the recognized person and object is output based on the captured image. The HOID information includes information about the recognized person, information about the recognized object, and an action ID that indicates the action of the person toward the object. In steps S11 and S12, when HOID information including an action ID indicating the action "holding an object" is output as the type of action, the holding of a product by the user is detected, and position information of the person (user) and the object (product) in the captured image is obtained.

The position of the product is detected, for example, as a bounding box, which is a rectangular area surrounding the product in the captured image.

[Step S13] After the holding of the product is detected in step S12, the action recognizing unit 133 tracks the position of the product from each image frame of the incoming captured image.

[Step S14] The action recognizing unit 133 determines whether tracking has ended. Tracking is considered to have ended when the product is separated from the user or when the product is no longer recognized in the captured image. If tracking has not ended, the process proceeds to step S13, and tracking continues. If tracking has ended, processing for the relevant product is completed.

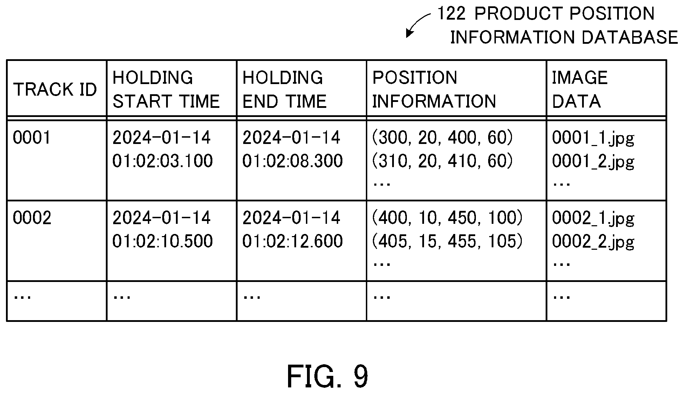

FIG. 9 illustrates a data configuration example of a product position information database. In the product position information database 122, a record is registered for each product that has been recognized as being held by the user. Each record includes a track ID, a holding start time, a holding end time, position information, and image data.

The track ID is an identification number assigned to each product. The holding start time indicates the first time when the holding of the product by the user is detected. When the product held by the user is detected in step S12 of FIG. 8, a record is added to the product position information database 122. A unique track ID is registered to the added record, and the time at that moment is registered as the holding start time.

The holding end time indicates the time when the holding of the product by the user ends. When tracking of the product is determined to have ended in step S14 of FIG. 8, the time at that moment is registered as the holding end time.

The position information indicates the position of the product in the captured image as coordinate information. For each image frame from the holding start time to the holding end time, coordinate information indicating the position of the corresponding product in the image frame is registered. When the product is detected in the form of a bounding box as described above, the position information may be information representing the location of the bounding box. For example, the position information may be a numerical string (x0, y0, x1, y1) indicating the coordinates of the top-left vertex (x0, y0) and the bottom-right vertex (x1, y1) of the bounding box.

The image data indicates the file names of the image data of the captured image (image frames) in which the product is detected.

During the period from the holding start time to the holding end time, the file names of the image data of the captured image in which the tracked product is recognized are sequentially registered in the image data field, and the coordinates indicating the position of the product in the captured image are sequentially registered in the position information field.

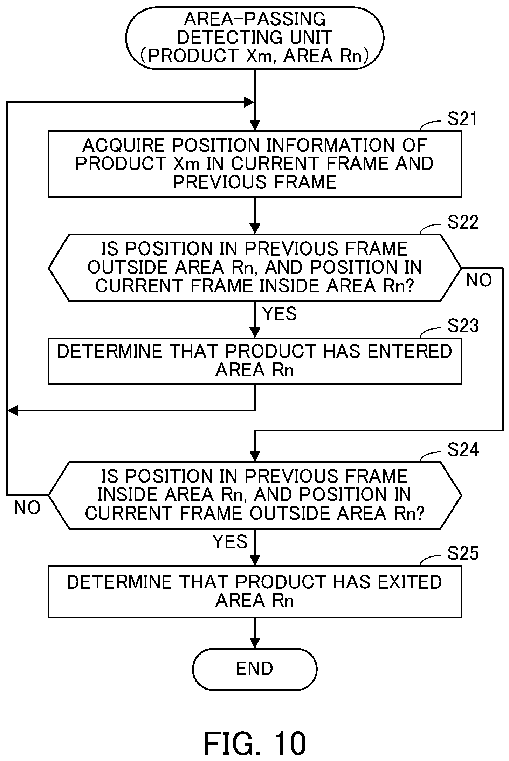

FIG. 10 is a flowchart illustrating a processing example performed by an area-passing detecting unit. The processing in FIG. 10 is executed for each image frame of a captured image. FIG. 10 depicts an example of processing when a product Xm with a tracking ID = m passes through a determination area Rn with an area ID = n. When the area ID is 1, it indicates the product pickup area R1; when the area ID is 2, it indicates the scanning area R2; and when the area ID is 3, it indicates the product removal area R3. The area-passing detecting unit 134 executes the processing in FIG. 10 for each of the determination areas with the area IDs 1 to 3.

[Step S21] The area-passing detecting unit 134 acquires, from the record of the product Xm (with the tracking ID = m) in the product position information database 122, the position information of the product Xm in the current frame (the most recent image frame) and the position information of the product Xm in the previous frame (the image frame immediately preceding the current frame).

[Step S22] The area-passing detecting unit 134 determines whether the position of the product Xm in the previous frame is outside the determination area Rn and the position of the product Xm in the current frame is inside the determination area Rn. If both conditions are satisfied, the process proceeds to step S23. If at least one of the conditions is not satisfied, the process proceeds to step S24.

[Step S23] The area-passing detecting unit 134 determines that the product Xm has entered the determination area Rn. After this, the process returns to step S21, and the next image frame is processed.

Note that, if the position of the product Xm is already inside the determination area Rn at the time the holding of the product Xm is detected in step S12 of FIG. 8, the process in step S23 is also executed.

[Step S24] The area-passing detecting unit 134 determines whether the position of the product Xm in the previous frame is inside the determination area Rn and the position of the product Xm in the current frame is outside the determination area Rn. If both conditions are satisfied, the process proceeds to step S25. If at least one of the conditions is not satisfied, the process returns to step S21, and the next image frame is processed.

Note also that, if tracking of the product Xm has ended in the current frame (corresponding to "Yes" in step S14 of FIG. 8), the process in step S24 is executed.

In steps S22 and S24, for example, it may be determined that the product Xm is inside the determination area Rn if even a part of the bounding box of the product Xm is within the determination area Rn, and outside the determination area Rn if the entire bounding box is not within the determination area Rn. Alternatively, it may be determined that the product Xm is inside the determination area Rn if the center point of the bounding box of the product Xm is within the determination area Rn, and outside the area if the center point of the bounding box is not within the area.

[Step S25] The area-passing detecting unit 134 determines that the product Xm has exited the determination area Rn.

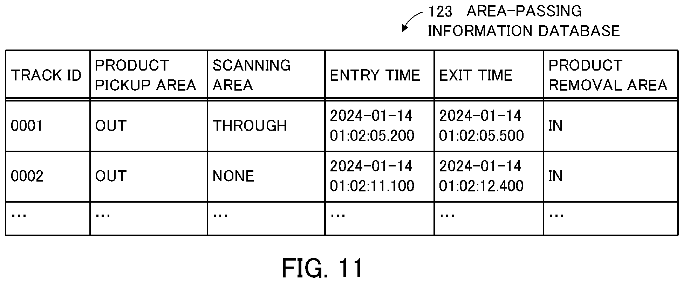

FIG. 11 illustrates a data configuration example of an area-passing information database. The area-passing information database 123 stores, for each product, a record (area-passing information). Each record includes a track ID, each determination area (the product pickup area R1, the scanning area R2, and the product removal area R3), an entry time, and an exit time.

The track ID is an identification number assigned to each product.

In the fields for each determination area, information indicating the passing status of the product through the determination area is stored. Initially, each determination area field is set to "NONE". When it is determined in step S23 of FIG. 10 that the product has entered the determination area, the corresponding field is updated to "IN". When it is determined in step S25 of FIG. 10 that the product has exited the product pickup area R1 or the product removal area R3, the corresponding field is updated to "OUT". On the other hand, when it is determined in step S25 that the product has exited the scanning area R2 after its status has been "IN", the corresponding field is updated to "THROUGH". In other words, "THROUGH" indicates that the product entered and then exited the determination area.

The entry time indicates the time at which the product entered the scanning area R2. When the product is determined in step S23 of FIG. 10 to have entered the scanning area R2, the corresponding time is registered as the entry time. The exit time indicates the time at which the product exited the scanning area R2. When the product is determined in step S25 to have exited the scanning area R2, the corresponding time is registered as the exit time.

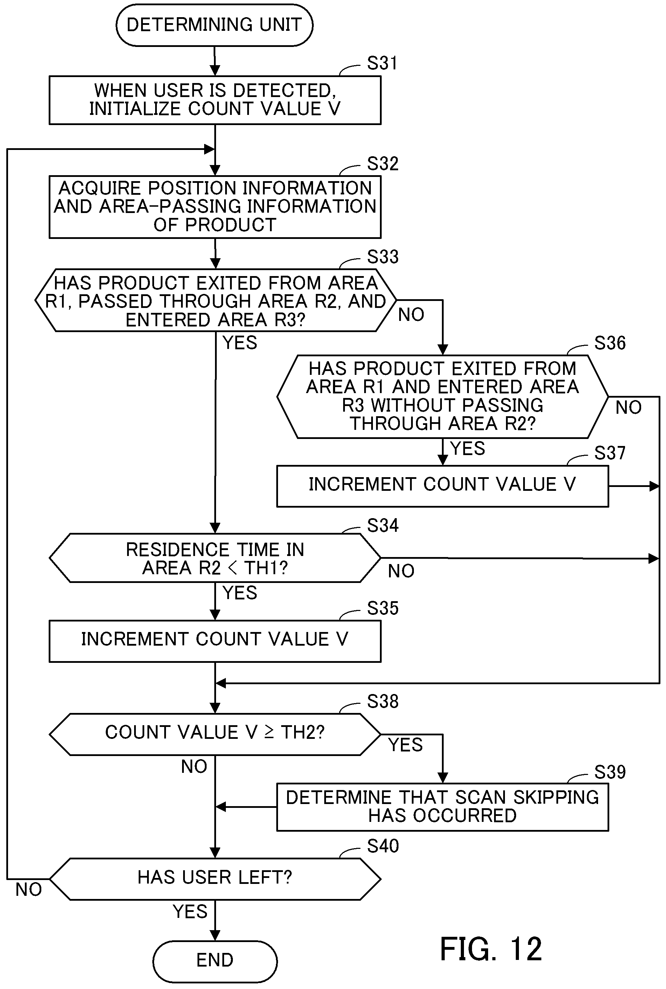

FIG. 12 is a flowchart illustrating a processing example performed by a determining unit. In the processing illustrated in FIG. 12, a fraud counter with a count value V is used for detecting fraudulent actions.

[Step S31] When a user is detected from a captured image in step S11 of FIG. 8, the determining unit 135 initializes the count value V of the fraud counter to 0. After that, when the holding of a product is detected in step S12 of FIG. 8, that product is set as the target for processing, and the process proceeds to step S32.

[Step S32] The determining unit 135 acquires, from the product position information database 122, the position information of the product in the current frame, and also acquires the current area-passing information (i.e., information of the record corresponding to the product) from the area-passing information database 123. If, in the area-passing information, the status for the product removal area R3 is "IN", the process proceeds to step S33. On the other hand, when the status for the product removal area R3 is not "IN", step S32 is executed again for the next image frame.

[Step S33] The determining unit 135 determines, based on the area-passing information, whether the product has exited from the product pickup area R1, passed through the scanning area R2, and entered the product removal area R3. If, in the area-passing information, the product pickup area R1 is marked as "OUT", the scanning area R2 is marked as "THROUGH", and the product removal area R3 is marked as "IN", then the condition is considered to be satisfied and the process proceeds to step S34. If the above condition is not satisfied, the process proceeds to step S36.

[Step S34] The determining unit 135 acquires, from the area-passing information, the entry time and the exit time for the scanning area R2. By calculating the difference between the exit time and the entry time, the determining unit 135 calculates the residence time of the product in the scanning area R2 (i.e., the time for the product to pass through the area).

The determining unit 135 determines whether the calculated residence time is less than a predetermined threshold TH1. If the residence time is less than the threshold TH1, the process proceeds to step S35. If the residence time is equal to or greater than the threshold TH1, the process proceeds to step S38.

In step S34, for example, the movement speed of the product in the scanning area R2 may also be compared with a predetermined threshold. For example, based on the position information registered in the product position information database 122, the total distance of the movement path of the product in the scanning area R2 may be calculated. The movement speed may be calculated by dividing the total distance by the above-mentioned residence time. In this case, if the movement speed is greater than the threshold, the process proceeds to step S35, and if the speed is equal to or less than the threshold, the process proceeds to step S38.

[Step S35] The determining unit 135 increments the count value V of the fraud counter by one.

[Step S36] The determining unit 135 determines, based on the area-passing information, whether the product has exited from the product pickup area R1 and entered the product removal area R3 without passing through the scanning area R2. If, in the area-passing information, the product pickup area R1 is marked as "OUT", the scanning area R2 is marked as "NONE", and the product removal area R3 is marked as "IN", then the condition is considered satisfied and the process proceeds to step S37. If the condition is not satisfied, the process proceeds to step S38.

[Step S37] The determining unit 135 increments the count value V of the fraud counter by one.

[Step S38] The determining unit 135 determines whether the count value V of the fraud counter is greater than or equal to a predetermined threshold TH2. If the count value V of the fraud counter is greater than or equal to the threshold TH2, the process proceeds to step S39. If the count value V of the fraud counter is less than the threshold TH2, the process proceeds to step S40.

[Step S39] The determining unit 135 determines that scan skipping is highly likely to have occurred and causes the notifying unit 136 to execute a process for issuing a warning accordingly.

The notifying unit 136, for example, displays image information indicating that scan skipping has occurred on the display device 114a to notify an administrator of the occurrence of scan skipping. A voice alert may also be issued. For example, the notifying unit 136 may output a warning voice indicating the occurrence of scan skipping through a speaker connected to the fraud detection device 100. If an administrator or store staff member is wearing an earphone capable of receiving audio via wireless communication, the notifying unit 136 may transmit voice information warning of the scan skipping and cause the voice to be output through the earphone.

The notifying unit 136 may also transmit notification information indicating that scan skipping has occurred to a management device in the store or to a management server overseeing multiple stores. Such notification information may include, for example, the time and date of occurrence, an identification number indicating the self-checkout terminal where the event occurred, and event content information indicating the occurrence of scan skipping.

[Step S40] The determining unit 135 determines whether the user has left. If the user is no longer detected in the captured image, the determining unit 135 determines that the user has left, and the processing in FIG. 12 related to the user is terminated. On the other hand, if the holding of a new product is detected in step S12 of FIG. 8, the new product is set as the target for processing, and the process returns to step S32.

According to the above processing by the determining unit 135, when the result of step S36 is "Yes", it is determined that the first type of fraudulent action illustrated in FIG. 4B is likely to have occurred. Even when the result of step S33 is "Yes" (i.e., when the product has moved from the product pickup area R1 through the scanning area R2 to the product removal area R3), if the result of step S34 is also "Yes", it is determined that the second type of fraudulent action illustrated in FIG. 4B is likely to have occurred. That is, by using the residence time in step S34 for determination, the determining unit 135 is able to detect not only the first type of fraudulent action but also the second type as scan skipping. Accordingly, scan skipping is detected with high accuracy using only the captured image from the camera 101, without cooperation with the self-checkout terminal 50 or a POS system.

The threshold TH2 in step S38 may be set to "1". However, by setting an integer value of "2" or more, such as "2", it is possible to reduce the likelihood of misdetection of scan skipping.

A modification in which a part of the processing performed by the determining unit 135 is changed will now be described.

### First Modification of Determination Process

In a first modification, the determining unit 135 detects scan skipping based on the movement trajectory of a product in a captured image.

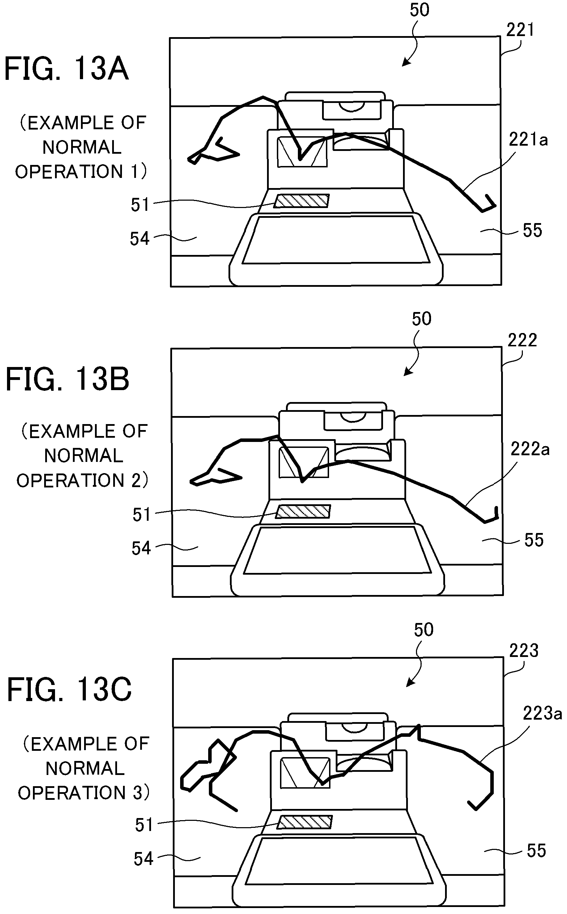

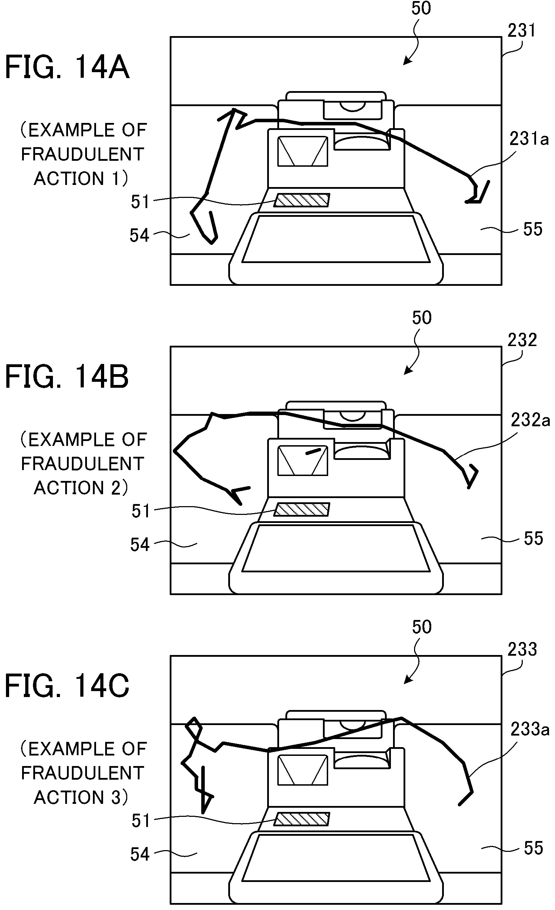

FIGS. 13A to 13C illustrate movement trajectory examples of a product when a normal scanning operation is performed. FIGS. 14A to 14C illustrate movement trajectory examples of a product when a fraudulent action is performed.

Images 221 to 223 illustrated in FIGS. 13A to 13C and images 231 to 233 illustrated in FIGS. 14A to 14C are captured from above by the camera 101 and depict an area near the front surface of the self-checkout terminal 50 (particularly, near the front of the barcode scanner 51). The images 221 to 223 and 231 to 233 depict movement trajectories 221a to 223a and 231a to 233a, respectively, of a product held by a user. In all the images 221 to 223 and 231 to 233, the pre-scan product placement area 54 is positioned on the left side of the self-checkout terminal 50, and the post-scan product placement area 55 is positioned on the right side of the self-checkout terminal 50. Accordingly, the product held by the user moves from the left side to the right side in each of the images 221 to 223 and 231 to 233.

The movement trajectories 221a to 223a depicted in the images 221 to 223 are each an example of a trajectory where the barcode of the product is properly scanned by the barcode scanner 51. According to these movement trajectories 221a to 223a, the product picked up from the pre-scan product placement area 54 is first drawn toward the user and then brought closer to the barcode scanner 51. After being scanned by the barcode scanner 51, the product is again drawn toward the user, and then moved away from the user to be placed in the post-scan product placement area 55. Therefore, in the captured image, the position of the product moves diagonally upward to the right, then diagonally downward to the right, and after the scan, again diagonally upward to the right, followed by diagonally downward to the right.

In this way, when a normal scanning operation is performed, the movement trajectory of the product generally traces a shape resembling the letter "M". In particular, in the region near the barcode scanner 51, the movement trajectory of the product generally forms a "V"-shaped pattern.

On the other hand, the movement trajectories 231a to 233a depicted in the images 231 to 233 are each an example of a trajectory where the barcode of the product is not scanned by the barcode scanner 51 due to a fraudulent action. According to these movement trajectories 231a to 233a, although the product picked up from the pre-scan product placement area 54 is once drawn toward the user similarly to the examples in FIGS. 13A to 13C, the product then moves almost in a straight line to the right or lower-right side.

Thus, there is a distinct difference in the shape of the movement trajectory between the case in which a normal action is performed and the case in which an abnormal action is performed. Especially in the region near the barcode scanner 51, when a normal action is performed, the movement trajectory of the product forms a "V"-shaped pattern (that is, a clear change in slope occurs in the middle). On the other hand, when an abnormal action is performed, the movement trajectory generally forms a straight line with no clear change in slope.

Accordingly, the determining unit 135 analyzes the characteristics of the movement trajectory of the product within the scanning area R2 set near the barcode scanner 51, and detects scan skipping based on the analysis result.

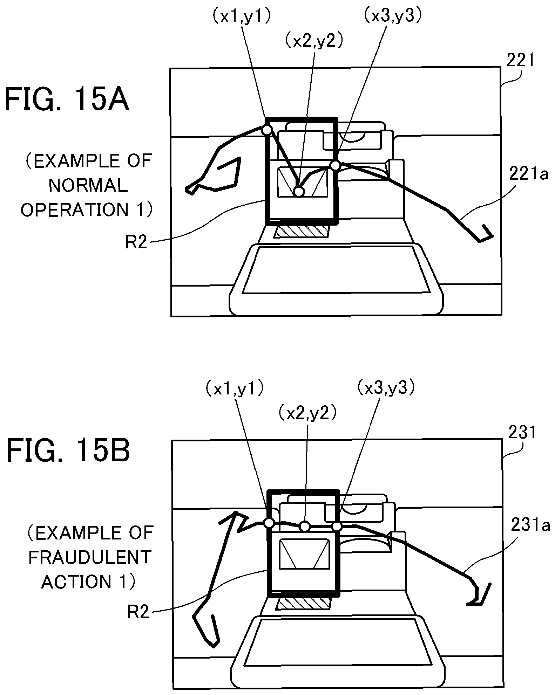

FIGS. 15A and 15B illustrate a detection example of scan skipping based on movement trajectories. FIG. 15A illustrates the image 221 presented in FIG. 13A as an example in which a normal scanning operation is performed, while FIG. 15B illustrates the image 231 presented in FIG. 14A as an example in which scan skipping is performed.

The determining unit 135 performs the analysis of the movement trajectory of the product within the scanning area R2 according to the following procedure. Based on the position information of the product registered in the product position information database 122, the determining unit 135 acquires entry position coordinates (x1, y1) of the product into the scanning area R2, lowest position coordinates (x2, y2) of the product within the scanning area R2, and exit position coordinates (x3, y3) of the product from the scanning area R2. The lowest position coordinates refer to the coordinates at which the y-coordinate of the product becomes minimum within the scanning area R2.

The determining unit 135 determines whether a clear change in the slope of the movement trajectory occurs at the lowest position, and determines the presence or absence of scan skipping based on the determination result. Furthermore, the determining unit 135 determines the presence or absence of scan skipping based on the difference in the length of the movement trajectory within the scanning area R2 before and after the lowest position. As described above, when scan skipping is committed, no clear change in the slope of the movement trajectory occurs, and therefore the lowest position is likely to deviate significantly from the center of the movement trajectory within the scanning area R2. As a result, the above-mentioned difference in trajectory length tends to become large.

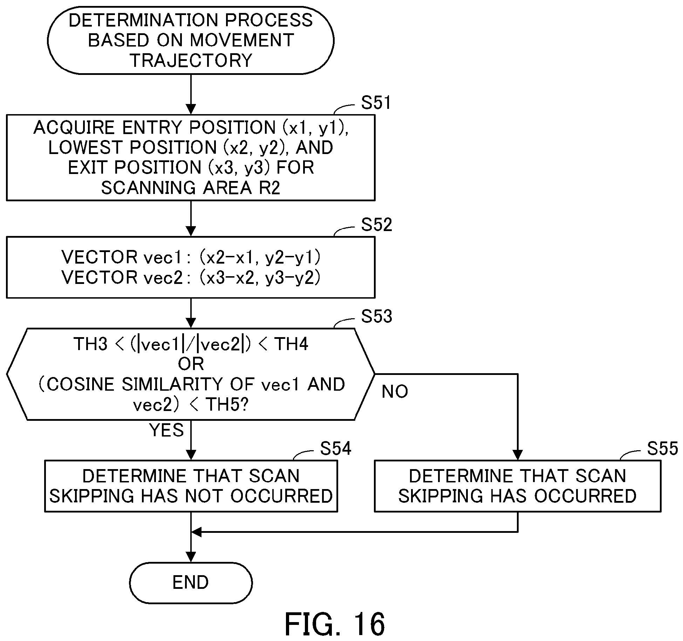

As one example, a process for determining whether scan skipping has occurred, using a vector vec1: (x2 - x1, y2 - y1) from the entry position to the lowest position, and a vector vec2: (x3 - x2, y3 - y2) from the lowest position to the exit position, is illustrated in FIG. 16.

FIG. 16 is a flowchart illustrating a determination process example based on a movement trajectory. The process in FIG. 16 is executed, for example, when the product exits the scanning area R2.

[Step S51] The determining unit 135 retrieves, from the record for the product in question in the product position information database 122, the entry position coordinates (x1, y1) of the product into the scanning area R2, the exit position coordinates (x3, y3) of the product from the scanning area R2, and the lowest position coordinates (x2, y2) of the product within the scanning area R2.

[Step S52] The determining unit 135 calculates the vector vec1: (x2 - x1, y2 - y1) and the vector vec2: (x3 - x2, y3 - y2).

[Step S53] The determining unit 135 determines whether at least one of the following determination conditions C1 and C2 is satisfied by the vectors vec1 and vec2.
Determination Condition C1: TH3 < (|vec1|/|vec2|) < TH4
Determination Condition C2: (cosine similarity between vec1 and vec2) < TH5

If the determination condition C2 is satisfied, this indicates that there is an angle greater than a certain threshold between the slopes of the movement trajectory segments before and after the lowest position. If the determination condition C1 is satisfied, this indicates that the difference in trajectory length before and after the lowest position within the scanning area R2 is small. If neither of the determination conditions C1 and C2 is satisfied, the shape of the movement trajectory within the scanning area R2 is likely to resemble a straight line rather than a V-shape. Therefore, it is determined that scan skipping has likely occurred. As one example, the thresholds may be set to TH3 = 0.5, TH4 = 1.5, and TH5 = 0.6.

If at least one of the determination conditions C1 and C2 is satisfied, the process proceeds to step S54. When neither of the determination conditions C1 and C2 is satisfied, the process proceeds to step S55.

[Step S54] The determining unit 135 determines that scan skipping has not occurred.

[Step S55] The determining unit 135 determines that scan skipping has occurred.

As described above, the determining unit 135 detects scan skipping by analyzing the movement trajectory of the product within the scanning area R2 and estimating its geometric characteristics. This makes it possible to detect scan skipping with high accuracy using only the captured image taken by the camera 101, without the need to cooperate with the self-checkout terminal 50 or a POS system.

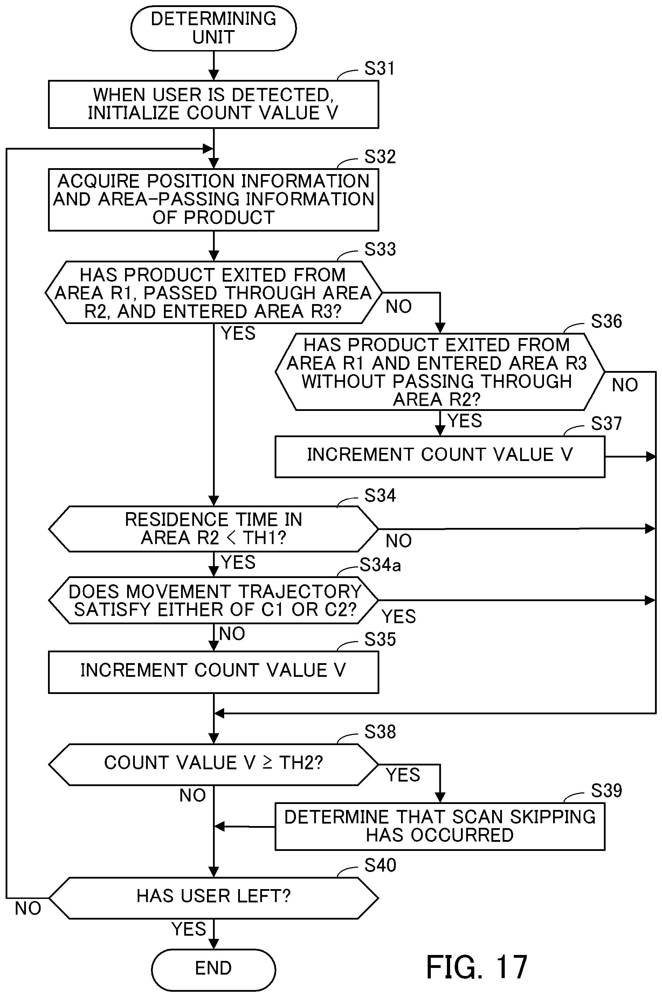

As illustrated in FIG. 17 below, the determining unit 135 may detect scan skipping using not only the movement trajectory of the product but also the above-described area-passing information.

FIG. 17 is a flowchart illustrating a determination process example based on both area-passing information and a movement trajectory. In FIG. 17, the same reference numerals are assigned to the same processing steps as those in FIG. 12, and detailed descriptions thereof are omitted.

In the process of FIG. 17, when a "Yes" determination is made in step S34 of FIG. 12, step S34a is executed. In step S34a, the determining unit 135 determines whether at least one of the determination conditions C1 and C2 described in step S53 of FIG. 16 is satisfied. If at least one of the determination conditions C1 and C2 is satisfied, it is determined that scan skipping has not occurred, and the process proceeds to step S38. On the other hand, if neither of the determination conditions C1 and C2 is satisfied, it is determined that scan skipping has occurred, and the process proceeds to step S35.

In this way, by determining scan skipping using both of the determination conditions in steps S34 and S34a, the determination accuracy is improved. As another example, it is also acceptable to have the process proceed to step S35 when a "Yes" determination is made in step S34, and also to proceed to step S35 when a "No" determination is made in step S34 and then a "No" determination is made in step S34a.

### Second Modification of Determination Process

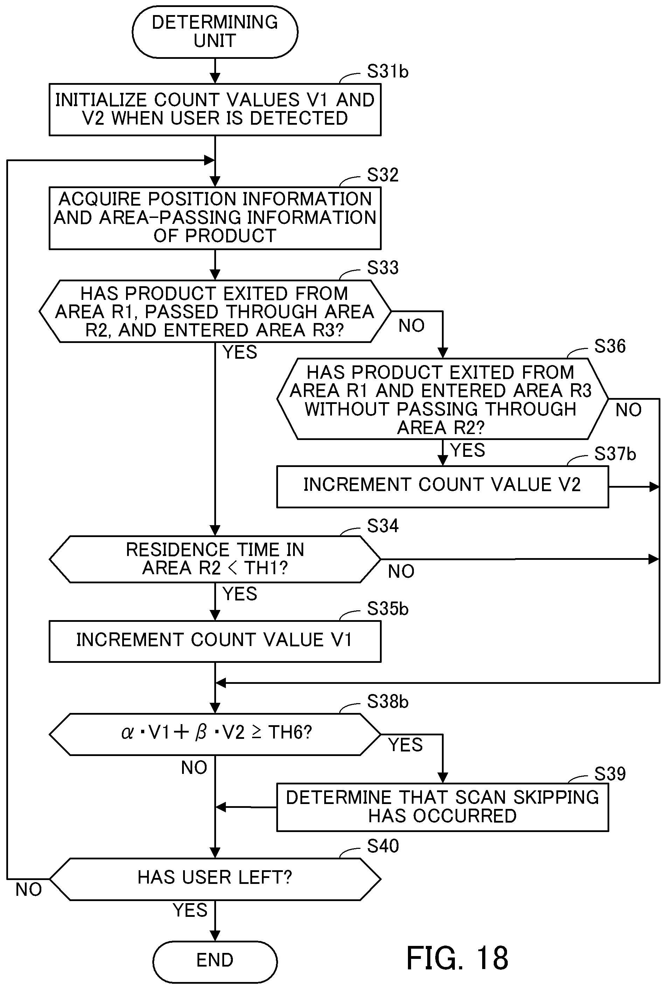

FIG. 18 is a flowchart illustrating a processing example performed by the determining unit in a second modification. In FIG. 18, the same reference numerals are assigned to the same processing steps as those in FIG. 12, and detailed descriptions thereof are omitted.

The processing in FIG. 18 differs from that in FIG. 12 in that two count values, V1 and V2, are used as the values of the fraud counter. The count value V1 is incremented when the condition in step S34 is satisfied, while the count value V2 is incremented when the condition in step S36 is satisfied. A weighted sum is calculated using the count values V1 and V2, and the presence or absence of scan skipping is determined based on the result of the sum.

In other words, in FIG. 18, steps S31b, S35b, S37b, and S38b are executed instead of steps S31, S35, S37, and S38 in FIG. 12, respectively.

[Step S31b] When a user is detected from the captured image, the determining unit 135 initializes the count values V1 and V2 of the fraud counter to 0. Thereafter, when the holding of a product is detected in step S12 of FIG. 8, the product is set as the processing target, and the process proceeds to step S32.

[Step S35b] The determining unit 135 increments the count value V1 of the fraud counter by one.

[Step S37b] The determining unit 135 increments the count value V2 of the fraud counter by one.

[Step S38b] The determining unit 135 calculates α·V1 + β ·V2 using weighting coefficients α and β, and determines whether the calculation result is equal to or greater than a predetermined threshold TH6. If the calculation result is equal to or greater than the threshold TH6, the process proceeds to step S39. If the calculation result is less than the threshold TH6, the process proceeds to step S40.

It is considered that the probability of a scan skipping detection error is lower when the condition in step S36 is satisfied than when the condition in step S34 is satisfied. Therefore, it is preferable that the weighting coefficients α and β be set such that α < β. For example, α = 0.8 and β = 1.2 may be used. As the threshold TH6, any integer equal to or greater than (α + β) may be used; however, setting an integer greater than (α + β) helps reduce the possibility of a scan skipping detection error.

According to the above-described processing by the determining unit 135, a count value is used for each scan skipping determination condition, and the presence or absence of scan skipping is determined based on the result of a weighted calculation using those count values. This makes it possible to improve the accuracy of scan skipping detection.

It is also possible to use the count values V1 and V2 in the processing of FIG. 17. Specifically, in this case, the count value V1 is incremented in step S35, and the count value V2 is incremented in step S37. Then, the determination in step S38b described above is performed in step S38. Since in this case the count value V1 is incremented based on the determination result in step S34a in addition to step S34, it is considered that the probability of a scan skipping detection error is lower than in the case of FIG. 18. Therefore, the weighting coefficient α applied to the count value V1 may be set to a higher value than that in FIG. 18.

Note that in the second embodiment and the first and second modifications described above, the presence or absence of a scan sound emitted when the barcode is scanned by the self-checkout terminal 50 may also be used to determine the presence or absence of scan skipping. Since the scan sound is unique to each self-checkout terminal 50, it is possible to predefine the sound for each monitored self-checkout terminal 50. The fraud detection device 100 may use a microphone to capture the scan sound and determines whether the captured sound corresponds to the predefined scan sound. For example, the determining unit 135 may determine whether the scan sound has been detected during the period in which the product is within the scanning area R2, and if the scan sound has been detected, may determine unconditionally that scan skipping has not occurred.

### (c) Third Embodiment

A fraud detection device according to a third embodiment will now be described. This fraud detection device is capable of detecting multiple types of fraudulent actions, including the above-described scan skipping.

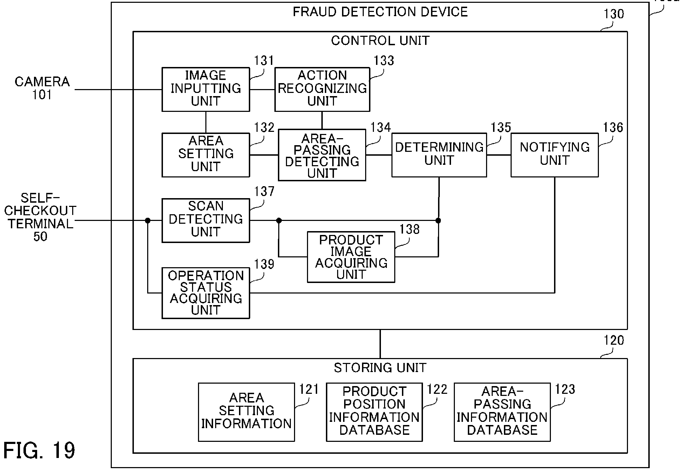

FIG. 19 illustrates a configuration example of processing functions included in a fraud detection device according to a third embodiment.

In a fraud detection device 100a illustrated in FIG. 19, the control unit 130 includes, in addition to the image inputting unit 131, the area setting unit 132, the action recognizing unit 133, the area-passing detecting unit 134, the determining unit 135, and the notifying unit 136 illustrated in FIG. 5, a scan detecting unit 137, a product image acquiring unit 138, and an operation status acquiring unit 139.

When a barcode is scanned at the self-checkout terminal 50, the scan detecting unit 137 receives, from the self-checkout terminal 50, a scan notification indicating that the barcode has been scanned. At this time, the scan detecting unit 137 also receives product information related to the scanned product. The product information includes product identification information and image data of the product's appearance (a product image).

The product image acquiring unit 138 extracts the product image from the product information received by the scan detecting unit 137.

The operation status acquiring unit 139 acquires, from the self-checkout terminal 50, information indicating the user's operation status. For example, the operation status acquiring unit 139 may acquire, from the self-checkout terminal 50, a checkout start notification indicating that a checkout operation for paying the price of the products has been started. The checkout start notification is transmitted from the self-checkout terminal 50, for example, when a user who has finished scanning the barcodes performs a checkout start operation by tapping a checkout start button displayed on the display 52 of the self-checkout terminal 50.

The determining unit 135 detects multiple types of fraudulent actions based on information obtained from the captured image (e.g., area-passing information and the residence time in the scanning area R2), the product image, and whether the checkout start notification has been received. In the present embodiment, the determining unit 135 is capable of detecting, as fraudulent actions, not only the aforementioned "scan skipping", but also "leaving unscanned products" and "barcode falsification". "Leaving unscanned products" is an action in which products that have not been scanned are intentionally left in the pre-scan product placement area 54 or the post-scan product placement area 55 to avoid scanning those products. "Barcode falsification" is an action in which the barcode attached to a product is replaced with a barcode of another lower-priced product, and the replaced barcode is scanned by the barcode scanner 51.

The notifying unit 136 issues a warning in different manners depending on the type of fraudulent action detected and the timing of the detection (i.e., whether the fraudulent action was detected before or after the checkout was started) .

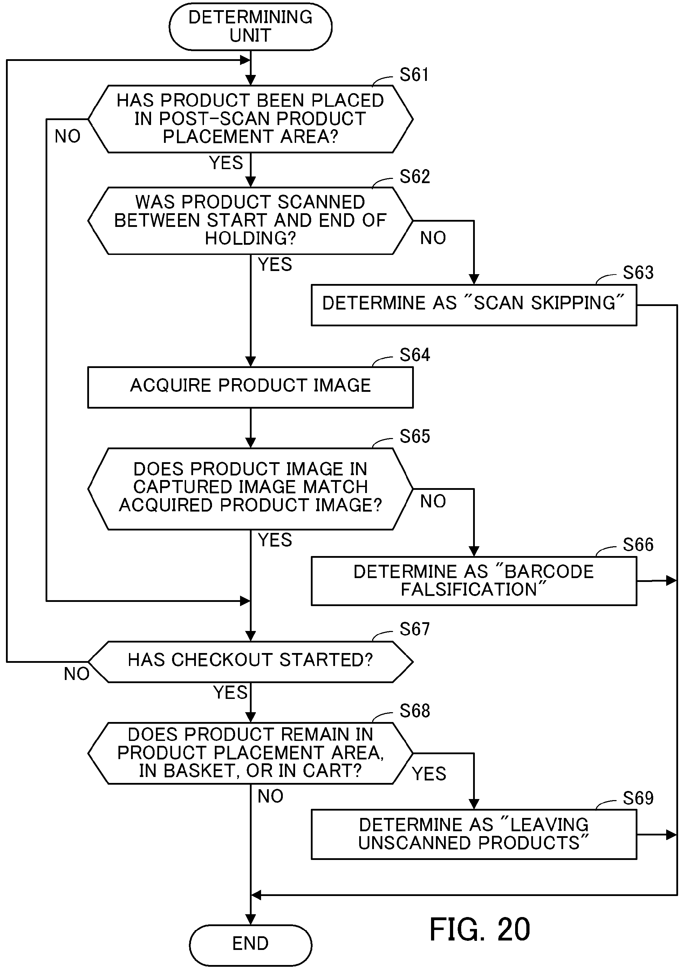

FIG. 20 is a flowchart illustrating a processing example performed by a determining unit according to the third embodiment.

[Step S61] The determining unit 135 determines whether the product has been placed in the post-scan product placement area 55. For example, assuming that the product removal area R3 is set to include the post-scan product placement area 55, the determining unit 135 determines that the product has been placed in the post-scan product placement area 55 if the holding of the product by the user has ended while the position of the product is within the product removal area R3. If the product has been placed in the post-scan product placement area 55, the process proceeds to step S62. If the product has not been placed in the post-scan product placement area 55, the process proceeds to step S67.

[Step S62] The determining unit 135 determines whether a barcode was scanned during the period from the start to the end of the holding of the product by the user. If a scan notification is received from the self-checkout terminal 50 during that period, it is determined that the product was scanned. If the product was scanned, the process proceeds to step S64. If the product was not scanned, the process proceeds to step S63.

[Step S63] The determining unit 135 determines that scan skipping has occurred.

[Step S64] The determining unit 135 acquires the product image from the product information received together with the scan notification from the self-checkout terminal 50.

[Step S65] The determining unit 135 compares the image of the product appearing in the captured image (the product whose holding has ended in step S61) with the product image acquired in step S64 and determines whether the images are similar. For example, the determining unit 135 may calculate feature values of each image using contrastive language-image pre-training (CLIP) or the like and determine that the images are similar if the similarity of the feature values is equal to or greater than a predetermined threshold. As one example, if the cosine similarity is 0.75 or greater, the images are determined to be similar. If the images are determined to be similar, the process proceeds to step S67. If the images are not similar, the process proceeds to step S66.

[Step S66] The determining unit 135 determines that barcode falsification has occurred.

[Step S67] The determining unit 135 determines whether checkout has been started on the self-checkout terminal 50. If a checkout start notification has been received from the self-checkout terminal 50 after the processing of step S61, it is determined that the checkout has started, and the process proceeds to step S68. If checkout has not started, the process returns to step S61.

[Step S68] The determining unit 135 determines whether any products remain in the pre-scan product placement area 54, in the shopping basket, or in the shopping cart. For example, image regions corresponding to those areas may be predefined in the captured image, and if any products are present in those regions, it is determined that products remain. If products remain, the process proceeds to step S69. If no products remain, the process illustrated in FIG. 20 ends.

[Step S69] The determining unit 135 determines that leaving unscanned products has occurred.

The determining unit 135 may also determine that leaving unscanned products has occurred, for example, when no scanning is performed for a certain period of time after the user has started holding a product, or when no scanning is performed for a certain period of time after a product placed in the pre-scan product placement area 54, a shopping basket, or a shopping cart has been recognized, even before a checkout start notification is received.

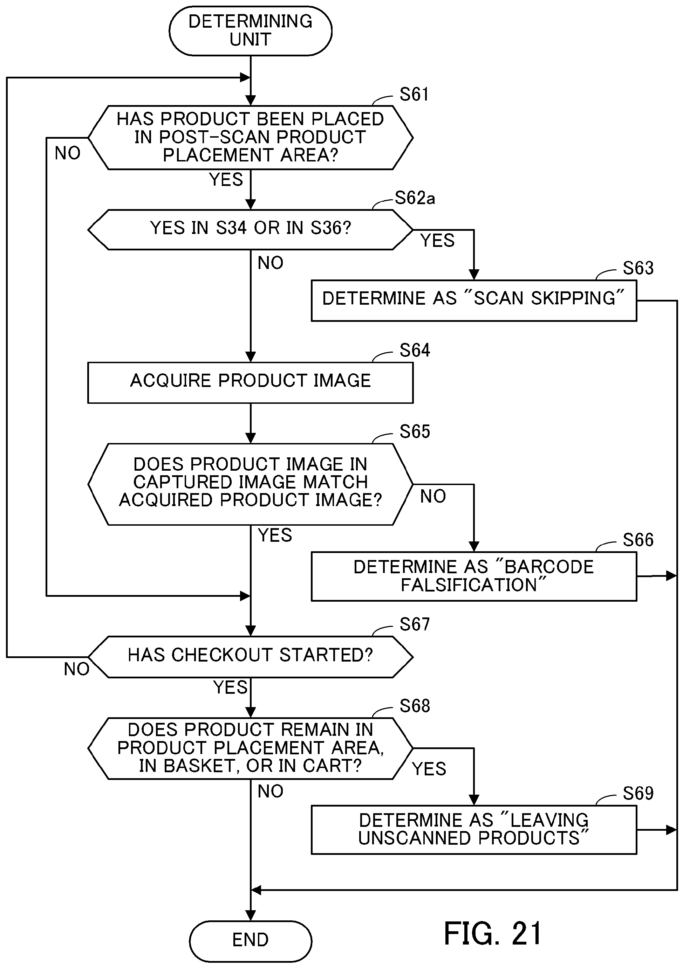

FIG. 21 is a flowchart illustrating a modification of the determination process depicted in FIG. 20. In FIG. 21, the same reference numerals are assigned to the same processing steps as those in FIG. 20, and detailed descriptions thereof are omitted.

The determination of scan skipping may be performed using the method described in the second embodiment. For example, in FIG. 21, step S62a is executed instead of step S62 in FIG. 20. In step S62a, if the determination result of either step S34 or step S36 in FIG. 12 is "Yes", the process proceeds to step S63. If the above condition is not met, the process proceeds to step S64. Alternatively, when the value V of the fraud counter in FIG. 12 is equal to or greater than the threshold TH2, the process may proceed to step S63, where it is determined that scan skipping has occurred.

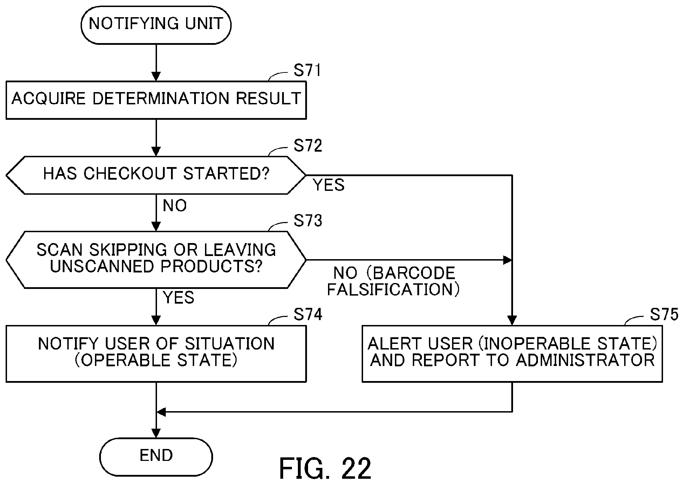

FIG. 22 is a flowchart illustrating a processing example performed by a notifying unit according to the third embodiment.

[Step S71] The notifying unit 136 acquires the determination result regarding a fraudulent action from the determining unit 135. That is, the subsequent processing is executed in cases where any type of fraudulent action has been detected by the determining unit 135.

[Step S72] The notifying unit 136 determines whether checkout has been started on the self-checkout terminal 50. If a checkout start notification has been received from the self-checkout terminal 50 before a fraudulent action is detected by the determining unit 135, it is determined that checkout has started, and the process proceeds to step S75. If checkout has not started, the process proceeds to step S73.

[Step S73] The notifying unit 136 determines the type of the detected fraudulent action. If scan skipping or leaving unscanned products has been detected, the process proceeds to step S74. If barcode falsification has been detected, the process proceeds to step S75.

[Step S74] The notifying unit 136 causes the display 52 of the self-checkout terminal 50 to display a notification image that informs the user of the situation related to the detected fraudulent action. For example, if scan skipping has been detected, a notification image indicating that a product has not been scanned is displayed to inform the user. If leaving unscanned products has been detected, a notification image indicating that unscanned products remain is displayed to inform the user. In either case, the self-checkout terminal 50 remains in a state where operation by the user is possible. By notifying the user of the above situation, the notifying unit 136 prompts the user to perform the scanning operation for the corresponding product.

[Step S75] The notifying unit 136 causes the display 52 of the self-checkout terminal 50 to display a warning image that issues a warning to the user. For example, the notifying unit 136 disables operation of the self-checkout terminal 50 by the user and displays a message such as "Please wait a moment" to notify the user that operation is not possible. In cases where scan skipping or leaving unscanned products has been detected, the notifying unit 136 may further notify the user that unscanned products remain. On the other hand, in cases where barcode falsification has been detected, the notifying unit 136 may issue a stronger warning message to the user.

In addition to displaying the above images on the self-checkout terminal 50, the notifying unit 136 also reports to the administrator of the self-checkout terminal 50 that a fraudulent action has been detected. For example, the notifying unit 136 outputs a voice message to the earphones worn by the administrator to report that a fraudulent action has been detected.

Here, in situations where scan skipping or leaving unscanned products has been detected, it is not always the case that the user failed to perform the scanning operation for the products intentionally; there is also a possibility that the user simply forgot to scan the products. Therefore, in step S74, the user is not given a strong warning, but is instead prompted to perform the scanning operation for the corresponding products.

On the other hand, barcode falsification is a type of fraudulent action that has a very high likelihood of being performed intentionally by the user. Therefore, in step S75, a stronger warning is issued to the user, and a report is also made to the administrator.

Furthermore, even in situations where scan skipping or leaving unscanned products has been detected, if checkout has been started through the user's operation, it is considered more likely that the user intentionally performed the action. Therefore, even in cases corresponding to a "Yes" determination in step S72, namely, where checkout has been started by the user despite the detection of scan skipping or leaving unscanned products, the process of step S75 is executed to issue a stronger warning to the user and also report the incident to the administrator.

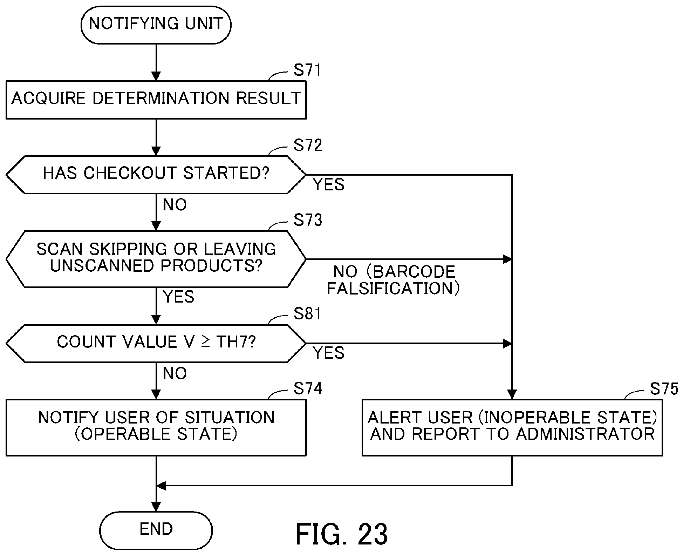

FIG. 23 illustrates a first modification of the process depicted in FIG. 22. In the first modification, as illustrated in FIG. 12, the number of times scan skipping has been detected is counted, and this is recorded as the count value V. Then, when a "Yes" determination is made in step S73 of FIG. 22, the process of step S81 is executed.

In Step S81, the notifying unit 136 determines whether the count value V is equal to or greater than a predetermined threshold TH7. If the count value V is less than the threshold TH7, the process proceeds to step S74, and if the count value V is equal to or greater than the threshold TH7, the process proceeds to step S75.

The higher the count value V is, the more likely it is that the scan skipping was intentionally performed by the user. Therefore, in the process of FIG. 23, even when checkout has not been started at the time scan skipping is detected, if the count value V indicating the number of such detections is equal to or greater than a certain value, a stronger warning is issued to the user compared to the case in which the count value V is less than the certain value.

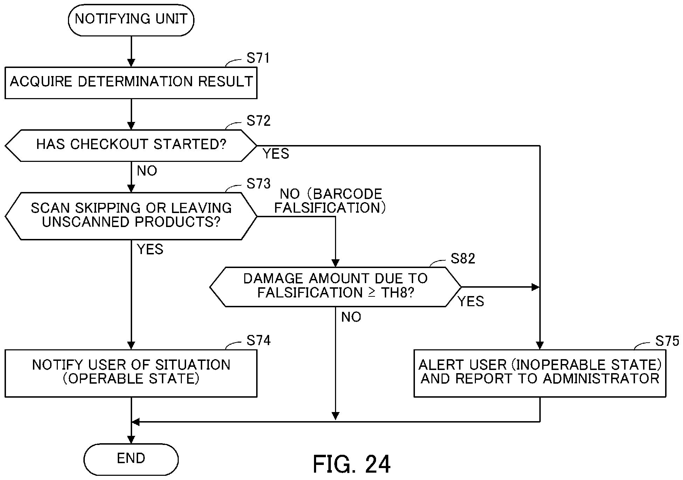

FIG. 24 illustrates a second modification of the process depicted in FIG. 22. In the second modification, a price database in which prices are associated with respective product images is stored in the storing unit 120 of the fraud detection device 100a. When a "No" determination is made in step S73 of FIG. 22 (that is, when barcode falsification is detected), the process of step S82 is executed.

In step S82, the notifying unit 136 extracts the image of the product for which barcode falsification has been detected from the captured image, and extracts the price corresponding to the product image from the above-described price database. The notifying unit 136 recognizes the extracted price as a damage amount caused by the barcode falsification, and determines whether the damage amount is equal to or greater than a predetermined threshold TH8. If the damage amount is equal to or greater than the threshold TH8, the process proceeds to step S75, and a strong warning is issued to the user and a report is made to the administrator. If the damage amount is less than the threshold TH8, no notification or warning is issued to the user.

The processing functions of the devices according to the above-described embodiments (for example, the fraud detection devices 10, 100, and 100a) may be implemented by a computer. In such a case, a program describing the processing contents of the functions to be provided in each device is supplied, and the processing functions are implemented on a computer by executing the program on the computer. The program describing the processing contents may be recorded on a computer-readable recording medium. Examples of computer-readable recording media include magnetic storage devices, optical discs, and semiconductor memories. Magnetic storage devices include hard disk drives (HDDs), magnetic tapes, and the like. Optical discs include compact discs (CDs), digital versatile discs (DVDs), and Blu-ray Discs (BD, registered trademark), among others.

When the program is to be distributed, for example, a portable recording medium such as a DVD or CD on which the program is recorded may be sold. Alternatively, the program may be stored in a storage device of a server computer and transferred from the server computer to another computer via a network.

A computer that executes the program stores, for example, the program recorded on the portable recording medium or the program transferred from the server computer in its own storage device. The computer then reads the program from the storage device and executes processing in accordance with the program. The computer may also directly read the program from the portable recording medium and execute processing in accordance with the program. Furthermore, the computer may sequentially execute processing in accordance with the received program each time the program is transferred from the server computer connected via a network.

In one aspect, it is possible to detect fraudulent actions related to scanning operations with high accuracy using captured images.

## Claims

1. A computer program that causes a computer to execute a process comprising:
recognizing a product (5) from a captured image (4) of a front region of a self-checkout terminal (3) including a scanner (2); and
detecting a fraudulent action related to a scanning operation for causing the scanner to scan product information attached to the product, based on a movement path of the product in a plurality of image areas (Ra to Rc) set in the captured image, and a residence time of the product in a first image area (Rb) that is closest to the scanner among the plurality of image areas.

2. The computer program according to claim 1, wherein:
the plurality of image areas includes a second image area (Ra) and a third image area (Rc) that are disposed facing each other across the first image area (Rb), and
the detecting of the fraudulent action includes determining that the fraudulent action has occurred when the product moves from the second image area to the third image area via the first image area, and the residence time of the product in the first image area is shorter than a predetermined threshold.

3. The computer program according to claim 2, wherein:
the captured image is an image of the front region of the self-checkout terminal taken from above.

4. The computer program according to claim 1, wherein:
the detecting of the fraudulent action includes performing the detecting based on the movement path and the residence time each time a recognition from the captured image is made that a same person has held each of a plurality of individual products included in the product, and
the process further includes:
notifying that the fraudulent action has been detected when a number of times the fraudulent action is detected reaches a predetermined value.

5. The computer program according to claim 1, wherein the process further includes:
determining, each time a recognition from the captured image is made that a same person has held each of a plurality of individual products included in the product, for the recognized product, whether a first condition based on the movement path and the residence time is satisfied, and whether a second condition based on the movement path is satisfied;
incrementing a first count value when the first condition is satisfied, and incrementing a second count value when the second condition is satisfied; and
notifying that the fraudulent action has been detected when a calculation result obtained by performing weighted addition of the first count value and the second count value using a predetermined weighting coefficient reaches a predetermined value.

6. The computer program according to claim 5, wherein:
the first condition indicates that all of the plurality of image areas is passed through in a predetermined order and that the residence time in the first image area is shorter than a predetermined threshold, and
the second condition indicates that, without passing through the first image area, another predetermined image area among the plurality of image areas is passed through.

7. The computer program according to claim 1, wherein:
the detecting of the fraudulent action includes detecting the fraudulent action based on the movement path, the residence time, and a characteristic of a shape of a movement trajectory of the product in the first image area.

8. The computer program according to claim 7, wherein:
the detecting of the fraudulent action includes determining the characteristic of the shape of the movement trajectory based on an entry position of the product into the first image area, a closest position of the product to the scanner in the first image area, and an exit position of the product from the first image area.

9. The computer program according to claim 1, wherein:
the detecting of the fraudulent action includes:
detecting a first fraudulent action related to the scanning operation based on the movement path and the residence time, and
detecting a second fraudulent action related to the scanning operation based on a recognition result of the product in the captured image and on information regarding the product or the scanning operation of the product, the information being acquired from the self-checkout terminal, and
the process further includes:
executing a notification process of fraudulent action detection in a different manner depending on whether the first fraudulent action or the second fraudulent action has been detected.

10. The computer program according to claim 1, wherein the process further includes:
receiving, from the self-checkout terminal, a notification indicating that a checkout start operation has been performed on the self-checkout terminal to terminate the scanning operation and initiate checkout; and
executing a notification process of fraudulent action detection in a different manner depending on whether the fraudulent action has been detected before or after the checkout start operation has been performed.

11. A fraud detection apparatus comprising:
memory means (11) for storing area information (13) indicating positions of a plurality of image areas (Ra to Rc) set in a captured image (4) of a front region of a self-checkout terminal (3) including a scanner (2); and
processing means for:
recognizing a product (5) from the captured image, and
detecting a fraudulent action related to a scanning operation for causing the scanner to scan product information attached to the product, based on a movement path of the product in the plurality of image areas, and a residence time of the product in a first image area (Rb) that is closest to the scanner among the plurality of image areas.

12. A fraud detection system comprising:
a camera (1) configured to capture an image of a front region of a self-checkout terminal (3) including a scanner (2); and
a fraud detection apparatus (10) configured to:
recognize a product (5) from the captured image (4), and
detect a fraudulent action related to a scanning operation for causing the scanner to scan product information attached to the product, based on a movement path of the product in a plurality of image areas (Ra to Rc) set in the captured image, and a residence time of the product in a first image area (Rb) that is closest to the scanner among the plurality of image areas.
